# EUROPEAN PATENT SPECIFICATION

(11) **EP 3 065 197 B1**
(45) Date of publication and mention of the grant of the patent: **31.07.2019**
(21) Application number: 14857759.6
(22) Date of filing: 31.10.2014
(51) Int. Cl.: H01M 2/10, H01M 2/20, H01M 10/48, H01M 10/42

(54) **BATTERY PACKAGE INCLUDING A SENSING BLOCK**
BATTERIEPACK MIT EINEM SENSORBLOCK
BLOC-BATTERIE COMPRENANT UN BLOC DE DÉTECTION

(30) Priority: 31.10.2013 KR 20130131085; 27.01.2014 KR 20140009652; 13.05.2014 KR 20140057370
(43) Date of publication of application: 07.09.2016
(73) Proprietor: Tyco Electronics AMP Korea Co., Ltd., Gyeongsangbuk-do 712-837 (KR)
(72) Inventor: AHN, Kwang Wook, Gyeongsan-si Gyeongsangbuk-do 712- 837 (KR)
(74) Representative: Johnstone, Douglas Ian
(86) International application number: PCT/KR2014/010331
(87) International publication number: WO 2015/065078

(56) References cited:
- EP-A1- 2 650 946
- WO-A1-2007/102670
- WO-A1-2007/102671
- WO-A2-2013/002507
- JP-A- 2013 089 488
- KR-A- 20100 109 857
- KR-A- 20100 109 871
- KR-A- 20130 001 381
- KR-A- 20130 094 733
- US-A1- 2010 151 299

## Description

### Technical Field

Embodiments of the present invention relate to a battery package including a sensing block.

### Background Art

Batteries are divided into primary batteries that are used once and discarded, and secondary batteries that can be recharged and used multiple times.

The secondary batteries are applied to various technical fields of industries due to such an advantage, and widely used as energy sources for electronic devices. Further, the secondary batteries are emerging as energy sources for hybrid electrical vehicles to solve air pollution issues caused by existing gasoline and diesel internal combustion engines using fossil fuels.

In general, a nickel metal hydrate (Ni-MH) battery is used as a secondary battery. Recently, use of a lithium-ion battery is being attempted. To satisfy high output and large capacity, a large-capacity secondary battery pack is used as the secondary battery by connecting small unit cells, hereinafter referred to as "battery cells", in series or in parallel. In the secondary battery pack, the battery cells may be stacked with high density, and prismatic or pouch cells are used to increase a utilization of a space.

Korean Registered Patent No. 10-1230954 discloses a battery module including (a) a battery cell stack having a plurality of battery cells or unit modules connected in series or in parallel to each other, or a plurality of battery cells or unit modules connected in series and in parallel to each other in a state in which the battery cells or the unit modules are stacked in the lateral direction, the battery cell stack being provided at the front thereof with bus bars to connect electrode terminals of the battery cells to external input and output terminals; (b) voltage sensing members provided at ends thereof with connection terminals electrically connected to electrode terminal connection parts of the battery cells disposed at the front and rear of the battery cell stack to sense voltages of the battery cells or the unit modules; (c) an upper case to cover the end of one side of the battery cell stack and portions of the top and bottom of the battery cell stack, the upper case being provided with mounting parts, in which the voltage sensing members are inserted and mounted; and (d) a lower case coupled to the upper case in a state in which the lower case covers the end of the other side of the battery cell stack and portions of the top and bottom of the battery cell stack, the lower case being provided at the front thereof with the external input and output terminals.

The battery module has difficulties in externally recognizing whether the electrode terminals of the battery cells are appropriately electrically connected to the voltage sensing members. In addition, the connection between the electrode terminals of the battery cells and the external input and output terminals is not solid.

KR 2013 0094733, on which the preamble of claim 1 is based, discloses a battery package comprising a stack of battery cells held in a housing, and a battery cell interconnect and voltage sensing assembly is coupled to a side of the stack of battery cells. The assembly has a frame comprising a support member and a gap provided on both sides of the support member. An electrical interconnect member is seated on the support member. A terminal of one of the battery cells is inserted through one of the gaps, and is coupled to the electrical interconnect member.

WO 2007/102670 and WO 2007/102671 both disclose a battery package comprising a battery cell stack and a voltage sensing member. The battery cell stack comprises unit modules wherein each unit module comprises two battery cells. An electrode terminal connection connects adjacent unit modules to construct the stack. The voltage sensing member has a pair of supporting parts. Conductive compression springs extend from each supporting part to engage respective electrode terminal connections.

### Disclosure of Invention

### Technical Goals

The present invention provides a battery package including a sensing block that may be conveniently assembled and definitively guarantee an electrical connection state.

### Technical solutions

According to the present invention, there is provided a battery package comprising: a battery assembly comprising a battery cell stack formed by stacking a plurality of battery cells comprising a cell lead, and a sensing block, the sensing block comprising: a block body portion comprising a terminal seat portion, and a cell lead coupling portion provided on one or both sides of the terminal seat portion; and a first connecting member configured to be seated on the terminal seat portion, and provided using a conductive material, wherein the sensing block is configured to be coupled to a side surface of the battery cell stack, wherein the cell lead is configured to be inserted into the cell lead coupling portion of the sensing block, and electrically and structurally connected to the first connecting member, characterized in that the battery package includes a lower housing provided on a lower side of the battery assembly, wherein the lower housing comprises: a second connecting member provided at a position corresponding to the first connecting member, wherein when the battery assembly is coupled to the lower housing, the first connecting member is connected to the second connecting member.

The sensing block may further include a cell stack fastening portion provided on one side of the block body portion, and configured to fix the block body portion to a battery cell stack.

The first connecting member may include a terminal body portion configured to be seated on the terminal seat portion; a bend portion configured to be bent from both sides of the terminal body portion to enclose the both sides of the terminal seat portion; and a connecting portion provided at one end portion of the terminal body portion, and having a width narrowing toward an outer side.

The block body portion may further include a circuit substrate seat portion on which the circuit substrate is to be seated; and a cover portion configured to protect the header pin.

The block body portion may further include a first locking portion provided in a form of a hook on one side of the terminal seat portion, the first connecting member may further include a first hanging portion provided in a form corresponding to the first locking portion, and the first connecting member may be configured to be fixed to the block body portion by coupling the first locking portion and the first hanging portion.

The block body portion may further include a second locking portion configured to protrude from a top surface of the terminal seat portion, and the first connecting member may further include a second hanging portion provided in a form of a hole corresponding to the second locking portion.

The cell lead coupling portion may be a hole provided on one or both sides of the terminal seat portion, a cell lead may be configured to penetrate through the cell lead coupling portion and be exposed to an external portion of the sensing block, and the first connecting member may include a terminal body portion configured to be seated on the terminal seat portion; and a bend portion configured to be bent from both sides of the terminal body portion, and inserted into the cell lead coupling portion.

The cell lead coupling portion may be a hole provided on one or both sides of the terminal seat portion, the cell lead may be configured to penetrate through the cell lead coupling portion and be exposed to an external portion of the sensing block, and an exposed portion of the cell lead may be configured to be bent and welded while being in contact with the first connecting member.

The cell lead coupling portion may be a hole provided on each of both sides of the terminal seat portion, a plurality of cell leads may be configured to penetrate through the respective holes provided on the both sides and be exposed to an external portion of the sensing block, and each exposed portion of the cell leads may be configured to be bent and stacked on the first connecting member to be coupled to the first connecting member.

The lower housing may further include guide rails configured to extend from a lower side in an upper direction to guide the battery assembly to be coupled to the lower housing.

The guide rails may be configured to be inserted into intervals among the plurality of battery cells.

A coupling hole may be provided at an end portion of at least a portion of the guide rails, and the fastening member penetrating through the upper housing may be inserted into the coupling hole.

The lower housing may further include a cover insertion portion provided on a periphery of the second connecting member and configured to receive the cover portion.

A plurality of first connecting members may be provided. The sensing block may further include a circuit substrate to which the plurality of first connecting members are connected; and a header pin configured to collect a signal flowing through the circuit substrate and transmit the collected signal to an external device. The block body portion may further include a circuit substrate seat portion on which the circuit substrate is to be seated; and a cover portion configured to protect the header pin. The lower housing may further include a cover insertion portion provided on a periphery of the second connecting member and configured to be coupled to the cover portion.

The lower housing may include a heat sink configured to enclose a lower end of the battery assembly; and side surface portions disposed on both sides of the heat sink, and configured to enclose side surfaces of the battery assembly.

### Advantageous Effects of the Invention

According to an example embodiment of the present invention, a battery package may be simply assembled. In detail, by seating a battery cell stack to which a sensing block is attached on a lower housing, battery cells may be structurally seated in the housing, and an electrical connection for voltage sensing may be completed.

According to another example embodiment of the present invention, by inserting a battery cell lead into a sensing block fixed to a side surface of a battery cell stack and connecting the cell lead to a bus bar of the sensing block on an external surface, a producer or a user may easily verify an electrical connection state. In detail, the electrical connection state in a battery package may be definitely guaranteed.

### Brief Description of Drawings

FIG. 1 is an exploded perspective view of a battery package according to a first example embodiment of the present invention.
FIG. 2 is an exploded perspective view illustrating a process of coupling a battery assembly to a lower housing according to the first example embodiment of the present invention.
FIG. 3 is a partial perspective view of a lower housing including a second connecting member according to the first example embodiment of the present invention.
FIG. 4 is an exploded perspective view of a sensing block according to the first example embodiment of the present invention.
FIG. 5 is a view illustrating a process of connecting a cell lead to a second connecting member.
FIG. 6 is a front cross-sectional view in a state in which a sensing block is coupled to a lower housing according to the first example embodiment of the present invention.
FIG. 7 is a side cross-sectional view in a state in which a sensing block is coupled to a lower housing according to the first example embodiment of the present invention.
FIG. 8 is a partial top view in a state in which an upper housing is separated from a battery package according to the first example embodiment of the present invention.
FIG. 9 is an exploded perspective view of a battery package according to a second example embodiment of the present invention.
FIG. 10 is a perspective view illustrating a state in which a battery cell stack, a sensing block, and a lower housing are coupled according to the second example embodiment of the present invention.
FIG. 11 is an exploded perspective view of a sensing block according to the second example embodiment of the present invention.
FIG. 12 is a partial perspective view of a lower housing including a second connecting member according to the second example embodiment of the present invention.
FIG. 13 is a cross-sectional view in a state in which a sensing block is coupled to a lower housing according to the second example embodiment of the present invention.

### Best Mode for Carrying Out the Invention

Hereinafter, certain embodiments of the present invention will be explained in more detail with reference to the attached drawings. The same component or components corresponding to each other will be provided with the same reference numeral, and their detailed explanation will be omitted. When it is determined that a detailed description is related to a related known function or configuration which may make the purpose of the present disclosure unnecessarily ambiguous in the description, such a detailed description will be omitted.

In addition, terms such as first, second, A, B, (a), (b), and the like may be used herein to describe components of the present invention. Each of these terminologies is not used to define an essence, order or sequence of a corresponding component but used merely to distinguish the corresponding component from other component(s). It should be noted that if it is described in the specification that one component is "connected", "coupled", or "joined" to another component, a third component may be "connected", "coupled", and "joined" between the first and second components, although the first component may be directly connected, coupled or joined to the second component.

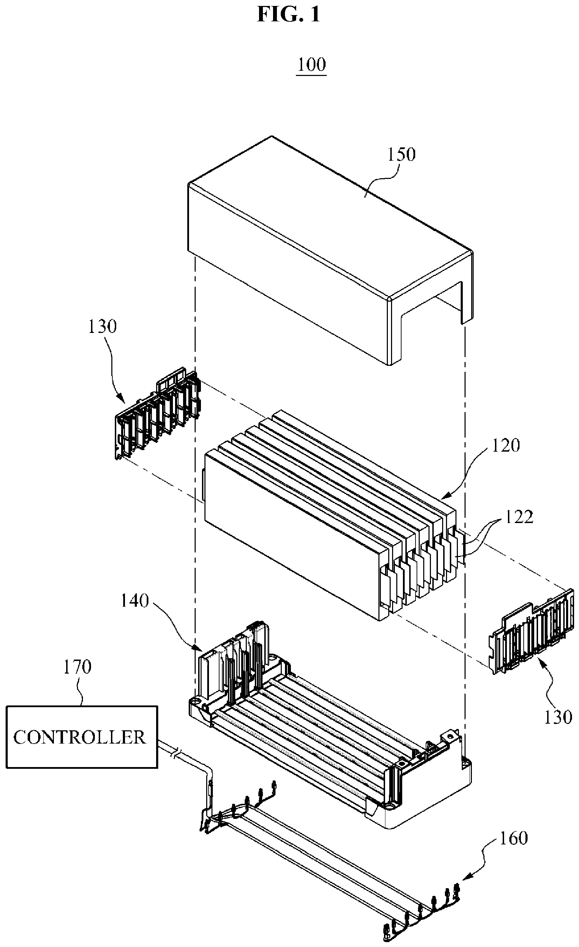

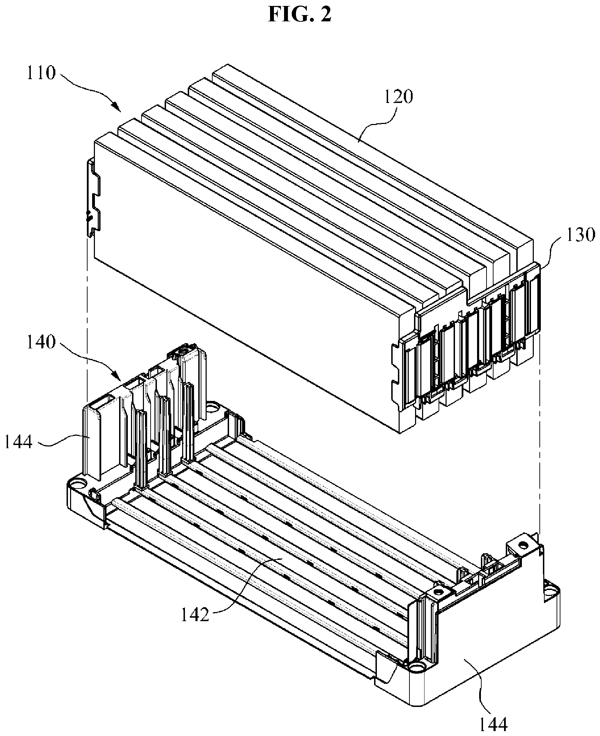

FIG. 1 is an exploded perspective view of a battery package according to a first example embodiment of the present invention, and FIG. 2 is an exploded perspective view illustrating a process of coupling a battery assembly to a lower housing according to the first example embodiment of the present invention.

Referring to FIGS. 1 and 2, a battery package 100 according to the first example embodiment of the present invention includes a battery assembly 110 including a battery cell stack 120 and a sensing block 130, a lower housing 140, an upper housing 150, and a sensing wire 160. The sensing wire 160 is connected to a controller 170 configured to control the battery package 100.

The battery assembly 110 includes the battery cell stack 120, and the sensing block 130 attached to one or both sides of the battery cell stack 120.

The battery cell stack 120 is formed by stacking a plurality of battery cells. The battery cells may be in a form of plates. The battery cells may be provided in a structure identical to, for example, that of the plate battery cells disclosed in FIG. 1 of Korean Registered Patent No. 10-123094. Thus, detailed descriptions of the battery cells will be omitted for conciseness.

The battery cell stack 120 may include the plurality of battery cells, a cell lead 122, and a power bus bar (not shown).

The cell lead 122 may be provided on one or both sides of the battery cells, and configured to transmit voltages of the battery cells.

The lower housing 140 is provided on a lower side of the battery assembly 110, and configured to enclose at least a portion of a lower end and/or a side surface of the battery assembly 110. The lower housing 140 may include a central portion 142, and a side surface portion 144.

The central portion 142 may be a portion configured to enclose the lower end of the battery assembly 110. On a top surface of the central portion 142, multiple ribs may be provided to partition and support the individual battery cells. The central portion 142 may include a material with an excellent heat conductivity to function as a heat sink configured to emit heat generated by the battery cell stack 120 to an outside. In this example, the central portion 142 may also be referred to as a "heat sink". The heat sink may include a metallic material, for example, copper or aluminum with an excellent heat conductivity.

The side surface portion 144 may enclose a portion of side surfaces of the battery assembly 110, and be structurally and electrically coupled to the sensing block 130. The side surface portion 144 may be coupled to one or both sides of the central portion 122. The side surface portion 144 may prevent an external force to be applied to the sensing block 130. The side surface portion 144 may include a material differing from that of the central portion 142. For example, the side surface portion 144 may include synthetic resin, such as plastic.

The upper housing 150 may be provided on an upper side of the battery assembly 110, and configured to enclose at least a portion of an upper end and/or side surfaces of the battery assembly 110.

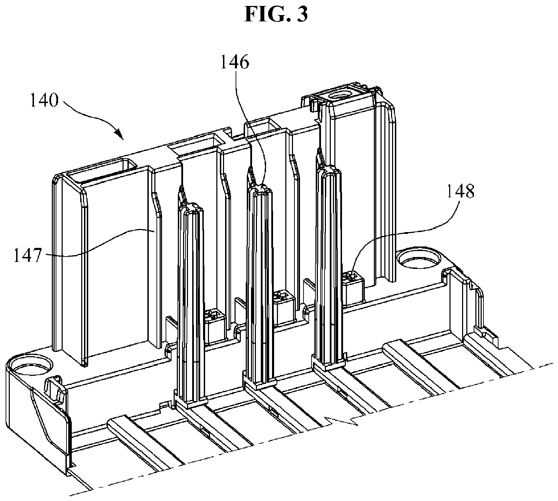

The sensing wire 160 may transmit information related to the battery cell stack 120 to the controller 170. For example, the sensing wire 160 may transmit, to the controller 170, information on voltages of the battery cell stack 120 or the individual battery cells (including a current to be used to measure states of the battery cells). One side of the sensing wire 160 may be connected to a second connecting member 148 of FIG. 3 provided on the lower housing 140, and another side of the sensing wire 160 may be connected to the controller 170.

The controller 170 may sense the states of the battery cells based on the information received from the sensing wire 160.

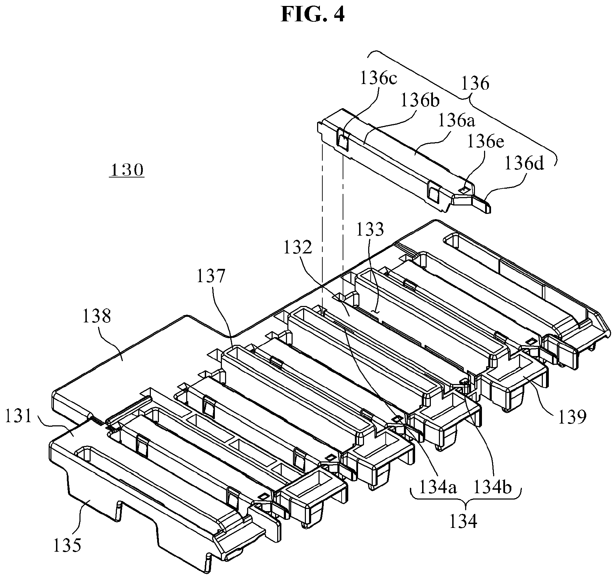

As shown in FIG. 2, the battery assembly 110 may be configured by coupling the sensing block 130 to one or both sides of the battery cell stack 120. In this example, the cell lead 122 is structurally and electrically connected to a first connecting member 136 (Fig. 4) of the sensing block 130. The battery assembly 110 is coupled to the lower housing 140. The first connecting member 136 is structurally and electrically connected to the second connecting member 148 of FIG. 3. Through the foregoing assembly process, the cell lead 122 may be electrically connected to the sensing wire 160 through the second connecting member 148.

FIG. 3 is a partial perspective view of the lower housing including the second connecting member according to the first example embodiment of the present invention.

Referring to FIG. 3, the lower housing 140 according to the first example embodiment of the present invention may include a guide rail 146, a guide rib 147, and the second connecting member 148.

The guide rail 146 may guide the battery assembly 110 to be coupled to the lower housing 140. The guide rail 146 may be a rail extending from a lower side of the lower housing 140 in an upper direction. The guide rail 146 may be provided on one side of the central portion 142 or the side surface portion 144. The guide rail 146 may guide the battery assembly 110 to be coupled or separated in a vertical direction, based on the example of FIG. 1. A plurality of guide rails 146 may be provided.

The guide rib 147 may guide the battery cell stack 120 to be coupled to the lower housing 140. In detail, the guide rib 147 may guide a slide rib 137 of FIG. 4 to be coupled in a sliding manner. The guide rib 147 may protrude on an inner wall of the side surface portion 144. An upper end of the guide rib 147 may be inclined downward in a direction toward an internal portion, and configured to enable the battery cell stack 120 to be smoothly coupled to the lower housing 140.

The second connecting member 148 is a portion to which the first connecting member 136 is to be structurally and electrically coupled. The second connecting member 148 may be provided on one side of the central portion 142 or the side surface portion 144. For example, the second connecting member 148 may be provided on an inner side of the side surface portion 144. A plurality of second connecting members 148 corresponding to a number of the first connecting members 136 may be provided.

The second connecting member 148 may be detachably provided in a shape corresponding to that of the first connecting member 136. For example, one of the first connecting member 136 and the second connecting member 148 may be provided in a protruding shape, and the other may be provided in a recessed shape so that the first connecting member 136 and the second connecting member 148 may be coupled to each other. By the foregoing shapes, in the assembly process of the battery assembly 110 and the lower housing 140, the first connecting member 136 may be structurally and electrically connected to the second connecting member 148.

In the interim, a cover insertion portion provided in a shape corresponding to a cover portion 139 of FIG. 4 may be configured to be recessed on one or both sides of the second connecting member 148. The cover insertion portion may be coupled to the cover portion 139. The cover insertion portion may be provided in a tapered shape to enable the cover portion 139 to be smoothly inserted into the cover insertion portion.

FIG. 4 is an exploded perspective view of the sensing block according to the first example embodiment of the present invention.

Referring to FIG. 4, the sensing block 130 according to the first example embodiment of the present invention may include a block body portion 131, a cell stack fastening portion 135, the first connecting member 136, a power bus bar supporting portion 138, and the cover portion 139.

The block body portion 131 may form an exterior of the sensing block 130. The block body portion 131 may include a terminal seat portion 132, a cell lead coupling portion 133, a locking portion 134, and the slide rib 137.

The terminal seat portion 132 is a portion on which the first connecting member 136 is to be seated.

The cell lead coupling portion 133 may be provided on one or both sides of the terminal seat portion 132. The cell lead 122 may be inserted into the cell lead coupling portion 133, and structurally and electrically connected to the first connecting member 136.

The cell lead coupling portion 133 may be, for example, a hole provided on one or both sides of the terminal seat portion 132. In this example, the cell lead 122 may be inserted through the cell lead coupling portion 133, and exposed on an external surface of the sensing block 130. However, an example embodiment is not limited thereto. The cell lead coupling portion 133 may not be essentially provided as a hole.

The locking portion 134 may fix the first connecting member 136 to the terminal seat portion 132.

A plurality of locking portions 134 may be provided to support the first connecting member 136 in different directions. For example, the locking portion 134 may include a first locking portion 134a provided on a side surface of the terminal seat portion 132, and a second locking portion 134b provided on a top surface of the terminal seat portion 132.

The first locking portion 134a may be, for example, a recess that is recessed from the side surface of the terminal seat portion 132.

The second locking portion 134b may be, for example, a protrusion that protrudes from the top surface of the terminal seat portion 132.

The first locking portion 134a and the second locking portion 134b may prevent the first connecting member 136 from being moved in a backward direction by an insertion repulsive force when the first connecting member 136 is coupled to the second connecting member 148. Thus, by the first locking portion 134a and the second locking portion 134b, the first connecting member 136 may be solidly coupled to the second connecting member 148.

Unlike the drawings, the first locking portion 134a may be a protrusion, and the second locking portion 134b may be a recess. Detailed descriptions will be omitted for conciseness.

The cell stack fastening portion 135 may be provided on one side of the block body portion 131, and enable the block body portion 131 to be fixed to the battery cell stack 120. For example, the cell stack fastening portion 135 may be bent from both ends of the block body portion 131. As shown in FIG. 1, a recess of a shape corresponding to the cell stack fastening portion 135 may be provided on both sides of the battery cell stack 120.

The slide rib 137 may protrude from one surface of the block body portion 131. The slide rib 137 may be provided in a shape corresponding to the guide rib 147 provided on the lower housing 140. The slide rib 137 may be inserted into a space between two adjacent guide ribs 147. For example, six guide ribs 147 may be provided on the lower housing 140 as shown in FIG. 3, and three slide ribs 137 corresponding to the six guide ribs 147 may be provided on the sensing block 130 as shown in FIG. 4. However, a number of the guide ribs 147 and a number of the slide ribs 137 are not limited thereto. By way of the slide rib 137 and the guide rib 147, the sensing block 130 may be coupled to the lower housing 140 at an accurate position. The first connecting member 136 may include a terminal body portion 136a, a bend portion 136b, hanging portions 136c and 136e, and a connecting portion 136d.

The terminal body portion 136a may form an exterior of the first connecting member 136.

The bend portion 136b may be bent from both sides of the terminal body portion 136a to enclose both sides of the terminal seat portion 132.

The hanging portions 136c and 136e may be provided in shapes corresponding to the first locking portion 134a and the second locking portion 134b, respectively, and enable the first connecting member 136 to be fixed to the terminal seat portion 132.

A plurality of hanging portions 136c and 136e may be provided. For example, the hanging portions 136c and 136e may include a first hanging portion 136c to be fastened to the first locking portion 134a, and a second hanging portion 136e to be fastened to the second locking portion 134b.

The first hanging portion 136c may be provided on the terminal body portion 136a or the bend portion 136b. For example, the first hanging portion 136c may be formed by cutting out a portion at which the terminal body portion 136a is adjacent to the bend portion 136b.

The second hanging portion 136e may be provided on the terminal body portion 136a. For example, the second hanging portion 136e may be a hole provided in the terminal body portion 136. The second locking portion 134b may be inserted into the second hanging portion 136e.

The connecting portion 136d may be a portion to be coupled to the second connecting member 148. The connecting portion 136d may be configured to protrude, for example, in a wedged shape. At least a portion of the connecting portion 136 may narrow toward an outer side. In detail, a width of an end portion of the connecting portion 136 may be configured to be narrower than a width of a remaining portion thereof. Thus, the connecting portion 136d may be easily fastened to the second connecting member 148.

Conversely, the connecting portion 136d and the second connecting member 148 may be provided in reversed shapes. For example, the second connecting member 148 may be configured to protrude in a wedged shape, and the connecting portion 136d may be detachably provided in a shape corresponding to the second connecting member 148.

The power bus bar supporting portion 138 may enable the power bus bar to be spaced apart from the cell lead 122. In detail, the power bus bar supporting portion 138 may prevent a direct contact between the power bus bar and the cell lead 122. The power bus bar supporting portion 138 may be a non-conductive material to be connected to the block body portion 131. The power bus bar supporting portion 138 and the block body portion 131 may be provided as an integral body, or provided as separate members.

The cover portion 139 may be configured to enclose at least a portion of the connecting portion 136d. The cover portion 139 may be configured to extend from the block body portion 131 in a direction in which the connecting portion 136d is exposed. The cover portion 139 may be provided on one or both sides of the connecting portion 136d. The cover portion 139 may be configured to extend toward a further outer side than the connecting portion 136d. The cover portion 139 may prevent the connecting portion 136d from being bent by an unexpected external force in a working process.

The cover portion 139 may be coupled to the cover insertion portion provided on one or both sides of the second connecting member 148. An end portion of the cover portion 139 may be provided in a tapered shape. By way of the foregoing shape, the cover portion 139 may be smoothly inserted into the cover insertion portion.

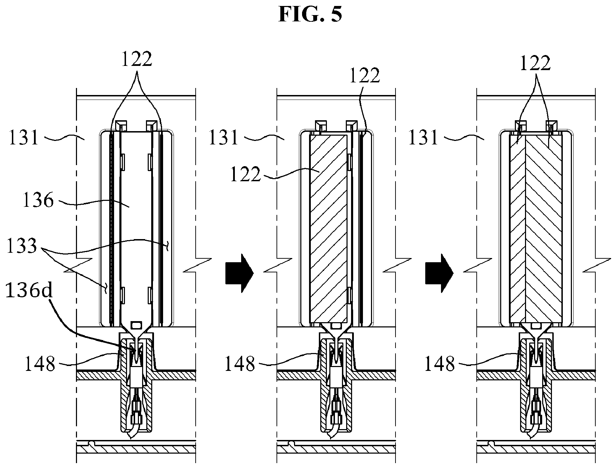

FIG. 5 is a view illustrating a process of connecting the cell lead to the second connecting member.

Referring to FIG. 5, in a process of coupling the sensing block 130 to the battery cell stack 120, the cell lead 122 may penetrate through the cell lead coupling portion 133 and be exposed to an external portion of the sensing block 130. Two cell leads 122 may be disposed on both sides of a single first connecting member 136.

An exposed portion of one of the two cell leads 122 may be bent to be in contact with the first connecting member 136. Similarly, an exposed portion of the other cell lead 122 may be bent to be in contact with the first connecting member 136. Using the foregoing method, the cell lead 122 may be electrically connected to the first connecting member 136.

To solidify an electrical connection in the foregoing state, the cell lead 122 and the first connecting member 136 may be welded, or fastened using a bolt. As a welding method, laser welding, ultrasonic welding, and the like may be used.

Using the foregoing method, whether the cell lead 122 is appropriately connected to the first connecting member 136 may be verified with naked eyes from the external portion of the battery assembly 110.

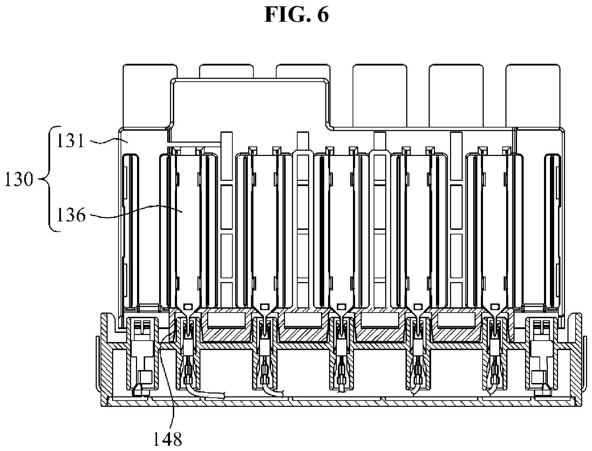

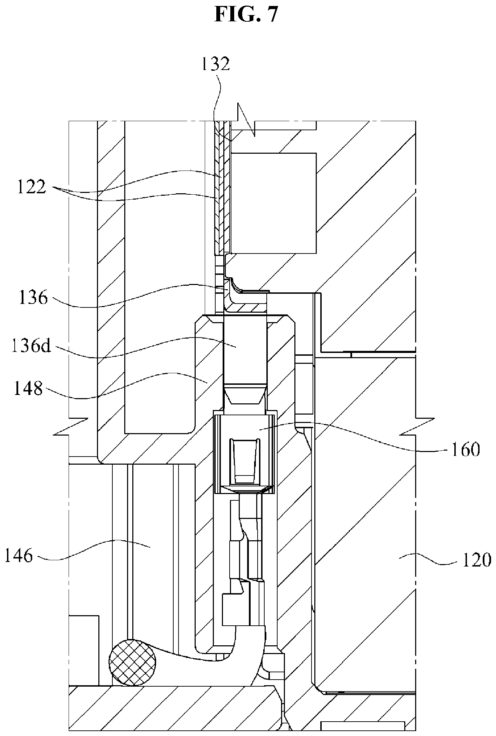

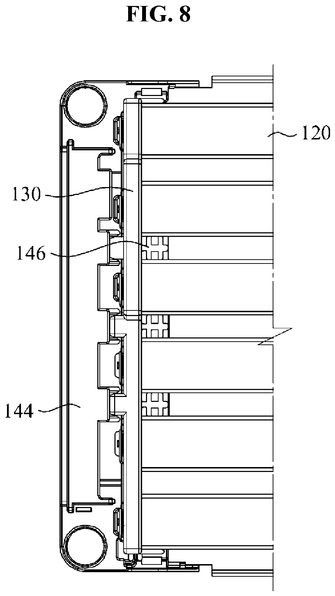

FIG. 6 is a front cross-sectional view in a state in which the sensing block is coupled to the lower housing according to the first example embodiment of the present invention, FIG. 7 is a side cross-sectional view in a state in which the sensing block is coupled to the lower housing according to the first example embodiment of the present invention, and FIG. 8 is a partial top view in a state in which the upper housing is separated from the battery package according to the first example embodiment of the present invention.

When the battery assembly 110 is coupled to the lower housing 140 as shown in FIGS. 6 through 8, the connecting portion 136d of the first connecting member 136 may be connected to the second connecting member 148.

The guide rail 146 may be inserted into an interval between the battery cell stack 120 and the sensing block 130, and configured to prevent the battery assembly 110 from moving in left, right, front, and back directions. The guide rail 146 may be inserted into a space between multiple individual battery cells constituting the battery cell stack 120.

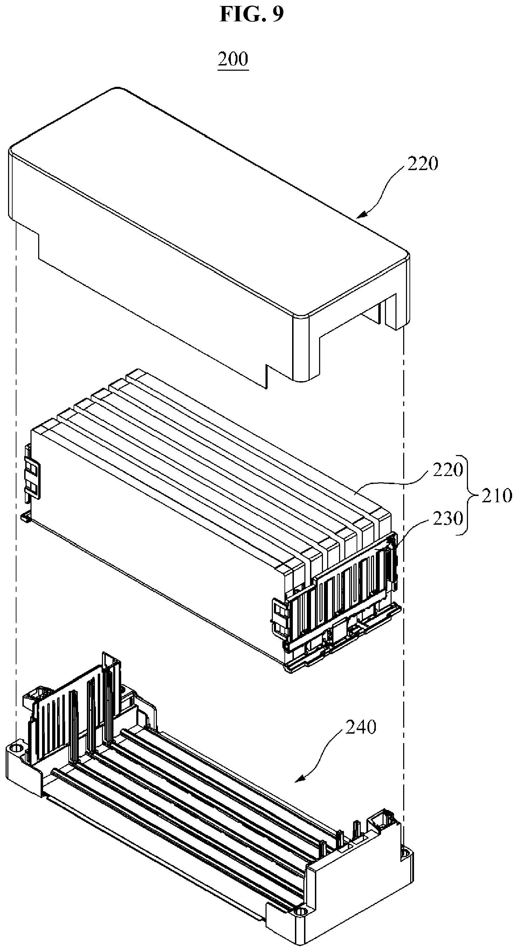

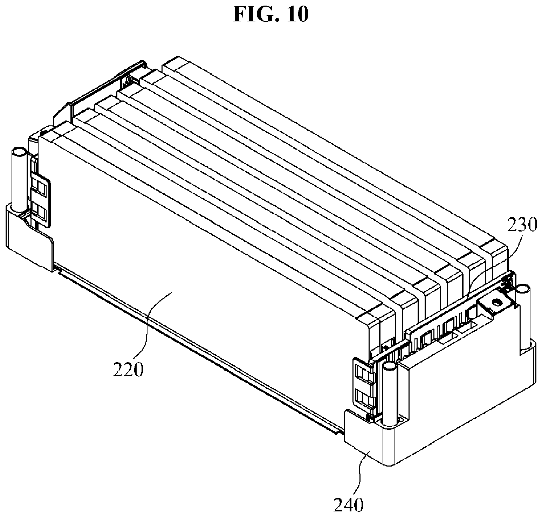

FIG. 9 is an exploded perspective view of a battery package according to a second example embodiment of the present invention, and FIG. 10 is a perspective view illustrating a state in which a battery cell stack, a sensing block, and a lower housing are coupled according to the second example embodiment of the present invention. Unless otherwise described, the descriptions of the first example embodiment may be applicable to the second example embodiment. Thus, duplicated descriptions will be omitted hereinafter for conciseness.

Referring to FIGS. 9 and 10, a battery package 200 according to the second example embodiment of the present invention includes a battery assembly 210 including a battery cell stack 220 and a sensing block 230, a lower housing 240, and an upper housing 250. The cell lead 122 is provided on the battery cell stack 220.

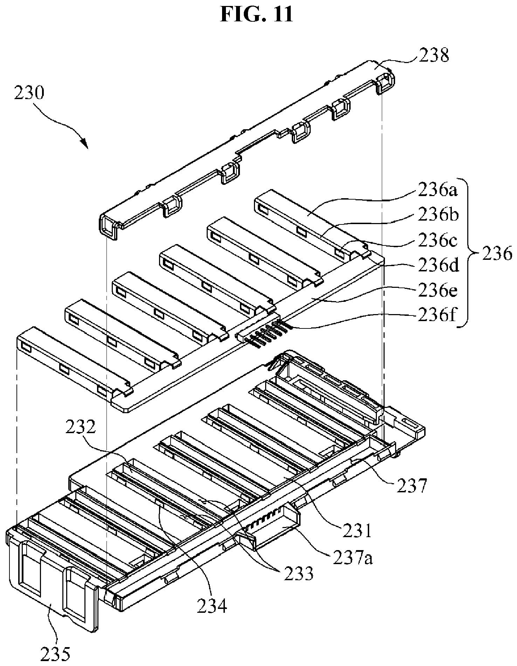

Similar to the first example embodiment of the present invention, the cell lead 122 is connected to a first connecting member 236 of the sensing block 230 of FIG. 11.

FIG. 11 is an exploded perspective view of the sensing block according to the second example embodiment of the present invention.

Referring to FIG. 11, the sensing block 230 according to the second example embodiment of the present invention may include a block body portion 231, a cell stack fastening portion 235, and the first connecting member 236.

The block body portion 231 may include a terminal seat portion 232, a cell lead coupling portion 233, a locking portion 134, and a circuit substrate seat portion 237.

The terminal seat portion 232 is a portion on which the first connecting member 236 is to be seated.

The cell lead coupling portion 233 may be provided on one or both sides of the terminal seat portion 232. The cell lead 122 may be inserted into the cell lead coupling portion 233, and electrically and structurally connected to the first connecting member 236.

The cell lead coupling portion 233 may be, for example, a hole provided on one or both sides of the terminal seat portion 232. In this example, the cell lead 122 may be inserted through the cell lead coupling portion 233, and exposed on an external surface of the sensing block 230.

The locking portion 234 may enable the first connecting member 236 to be fixed to the terminal seat portion 232. The locking portion 234 may be provided on one side of the terminal seat portion 232. The locking portion 234 may be provided, for example, in a form of a hook.

The circuit substrate seat portion 237 may be a space in which a circuit substrate 236e is to be seated. The circuit substrate seat portion 237 may be configured to be recessed on one side of the block body portion 231. The circuit substrate seat portion 237 may be configured to be elongated in a direction intersecting a longitudinal direction of the terminal seat portion 232. For example, the circuit substrate seat portion 237 may be provided in a direction orthogonal to the terminal seat portion 232. By the circuit substrate seat portion 237, the circuit substrate 236e may be solidly fixed.

A cover portion 237a may be configured to extend on one side of the circuit substrate seat portion 237. The cover portion 237a may protect a header pin 236f.

For example, the cover portion 237a may be provided on an opposite side of the terminal seat portion 232 with respect to the circuit substrate seat portion 237. The cover portion 237a may be provided at a central portion of the circuit substrate seat portion 237. The cover portion 237a may be provided in a shape of approximately a flattened-U shape.

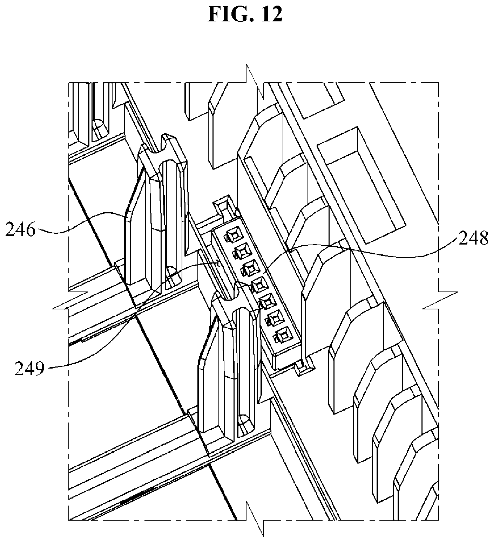

The cover portion 237a may prevent the header pin 236f from being bent or damaged by an external force. Further, by the shape of the cover portion 237a, the cover portion 237a may be engaged with a cover insertion portion 249 (FIG. 12) to guide the header pin 236f to be inserted in a correct direction.

The cell stack fastening portion 235 may be provided on one side of the block body portion 231, and enable the block body portion 231 to be fixed to the battery cell stack 220. For example, the cell stack fastening portion 235 may be bent from both ends of the block body portion 231. The cell stack fastening portion 234 may be provided, for example, a shape of a hook.

The first connecting member 236 may include a terminal body portion 236a, a bend portion 236b, a hanging portion 236c, a connecting portion 236d, the circuit substrate 236e, and the header pin 236f.

The terminal body portion 236a may form an exterior of the first connecting member 236. The cell lead 122 may be connected to the terminal body portion 236a.

The bend portion 236b may be bent from both sides of the terminal body portion 236a to enclose both sides of the terminal seat portion 232.

The hanging portion 236c may be provided in a shape corresponding to the locking portion 234, and enable the first connecting member 236 to be fixed to the terminal seat portion 232. The hanging portion 236c may be provided on the terminal body portion 236a or the bend portion 236b. For example, the hanging portion 236c may be formed by cutting out a portion at which the terminal body portion 236a is adjacent to the bend portion 236b.

The connecting portion 236d may be connected to the circuit substrate 236e. When a plurality of connecting portions 236d are provided, the plurality of connecting portions 236d may be electrically connected to a single circuit substrate 236e. Through the connecting portion 236d, the cell lead 122 may be electrically connected to the circuit substrate 236e.

The circuit substrate 236e may be electrically connected to the connecting portion 236d, and transmit information received from the cell lead 122 to a second connecting member 248 of FIG. 12. The circuit substrate 236e may be seated on the circuit substrate seat portion 237.

The header pin 236f may be provided on one side of the circuit substrate 236e, and coupled to the second connecting member 248. The header pin 236f may be provided on an inner side of the cover portion 237a. In detail, the cover portion 237a may be configured to enclose at least a portion of the header pin 236f.

For example, the header pin 236f may be provided on an opposite side of the terminal body portion 236a with respect to the circuit substrate 236e. The header pin 236f may be provided at a central portion of the circuit substrate 236e.

FIG. 12 is a partial perspective view of the lower housing including the second connecting member according to the second example embodiment of the present invention.

Referring to FIG. 12, the lower housing 240 according to the second example embodiment of the present invention may include a guide rail 246, and the second connecting member 248.

The guide rail 246 may guide the battery assembly 210 to be coupled to the lower housing 240. The guide rail 246 may be a rail extending from a lower side of the lower housing 240 in an upper direction. The guide rail 246 may be provided on one side of the central portion 242 or the side surface portion 244. The guide rail 246 may guide the battery assembly 210 to be coupled or separated in a vertical direction, based on the example of FIG. 8.

The second connecting member 248 may be a portion to which the first connecting member 236 is to be structurally and electrically coupled. The second connecting member 248 may be provided at a position corresponding to the first connecting member 236. The second connecting member 248 may be provided to be detachable from the header pin 236f.

The cover insertion portion 249 into which the cover portion 237a is to be inserted may be provided on a periphery of the second connecting member 248. The cover insertion portion 249 may be a recess that is recessed from one surface of the lower housing 240, or a hole provided by cutting out a portion of the lower housing 240.

The cover insertion portion 249 may be provided in a shape corresponding to the cover portion 237a. For example, the cover insertion portion 249 may be provided in a shape of a flattened-U shape.

In an assembly process of the battery assembly 210 and the lower housing 240, the first connecting member 236 may be structurally and electrically connected to the second connecting member 248.

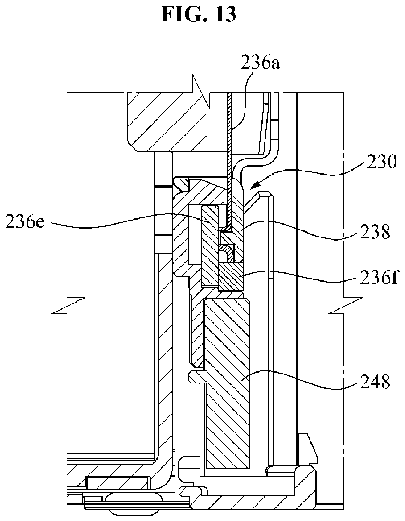

FIG. 13 is a cross-sectional view in a state in which the sensing block is coupled to the lower housing according to the second example embodiment of the present invention.

When the battery assembly 210 is coupled to the lower housing 240 as shown in FIG. 13, the header pin 236f of the first connecting member 236 may be connected to the second connecting member 248. In detail, by assembling the battery assembly 210 and the lower housing 240, the first connecting member 236 may be structurally and electrically connected to the second connecting member 248.

According to example embodiments of the present invention, a battery package may be simply assembled. In detail, by seating a battery cell stack to which a sensing block is attached on a lower housing, battery cells may be structurally seated in the housing, and an electrical connection for voltage sensing is completed. Further, by inserting a battery cell lead into the sensing block fixed to a side surface of the battery cell stack and connecting the cell lead to a bus bar of the sensing block on an external surface, a producer or a user may readily verify an electrical connection state. In detail, the electrical connection state in a battery package may be definitely guaranteed.

Although a few embodiments of the present invention have been shown and described, the present invention is not limited to the described embodiments. Instead, it would be appreciated by those skilled in the art that changes may be made to these embodiments without departing from the principles of the invention, the scope of which is defined by the claims.

## Claims

1. A battery package (100) comprising:
a battery assembly (110) comprising a battery cell stack (120) formed by stacking a plurality of battery cells comprising a cell lead (122), and a sensing block (130), the sensing block comprising: a block body portion (131) comprising a terminal seat portion (132), and a cell lead coupling portion (133) provided on one or both sides of the terminal seat portion (132); and a first connecting member (136) configured to be seated on the terminal seat portion (132), and provided using a conductive material, wherein the sensing block (130) is configured to be coupled to a side surface of the battery cell stack (120),
wherein the cell lead (122) is configured to be inserted into the cell lead coupling portion (133) of the sensing block (130), and electrically and structurally connected to the first connecting member (136),
**characterized in that**
the battery package includes a lower housing (140) provided on a lower side of the battery assembly (110), wherein the lower housing (140) comprises: a second connecting member (148) provided at a position corresponding to the first connecting member (136),
wherein when the battery assembly (110) is coupled to the lower housing (140), the first connecting member (136) is connected to the second connecting member (148).

2. The battery package of claim 1, wherein the sensing block further comprises:
a cell stack fastening portion (135) provided on one side of the block body portion (131), and configured to fix the block body portion (131) to a battery cell stack (120).

3. The battery package of claim 1, wherein the first connecting member (136) comprises:
a terminal body portion (136a) configured to be seated on the terminal seat portion (132);
a bend portion (136b) configured to be bent from both sides of the terminal body portion (136a) to enclose the both sides of the terminal seat portion (132); and
a connecting portion (136d) provided at one end portion of the terminal body portion (136a), and having a width narrowing toward an outer side.

4. The battery package of claim 1, wherein a plurality of first connecting members (236) are provided, and
the sensing block (230) further comprises:
a circuit substrate (236e) to which the plurality of first connecting members (236) are connected; and
a header pin (236f) configured to collect a signal flowing through the circuit substrate (236e) and transmit the collected signal to an external device.

5. The battery package of claim 4, wherein the block body portion (231) further comprises:
a circuit substrate seat portion (237) on which the circuit substrate (236e) is to be seated; and
a cover portion (237a) configured to protect the header pin (23 6f).

6. The battery package of claim 1, wherein the block body portion (131) further comprises a first locking portion (134a) provided in a form of a hook on one side of the terminal seat portion (132),
the first connecting member (136) further comprises a first hanging portion (136c) provided in a form corresponding to the first locking portion (134a), and
the first connecting member (136) is configured to be fixed to the block body portion (131) by coupling the first locking portion (134a) and the first hanging portion (136c).

7. The battery package of claim 1, wherein the block body portion (131) further comprises a second locking portion (134b) configured to protrude from a top surface of the terminal seat portion (132), and
the first connecting member (136) further comprises a second hanging portion (136e) provided in a form of a hole corresponding to the second locking portion (134b).

8. The battery package of claim 7, wherein the cell lead coupling portion (133) is a hole provided on one or both sides of the terminal seat portion (132),
the cell lead (122) is configured to penetrate through the cell lead coupling portion (133) and be exposed to an external portion of the sensing block (130), and
the first connecting member (136) comprises:
a terminal body portion (136a) configured to be seated on the terminal seat portion (132); and
a bend portion (136b) configured to be bent from both sides of the terminal body portion (136a), and inserted into the cell lead coupling portion (133).

9. The battery package of claim 1, wherein the cell lead coupling portion (133) is a hole provided on one or both sides of the terminal seat portion (132),
the cell lead (122) is configured to penetrate through the cell lead coupling portion (133) and be exposed to an external portion of the sensing block (130), and
an exposed portion of the cell lead (122) is configured to be bent and welded while being in contact with the first connecting member (136) of the sensing block (130).

10. The battery package of claim 1, wherein the cell lead coupling portion (133) is a hole provided on each of both sides of the terminal seat portion (132),
a plurality of cell leads (122) are configured to penetrate through the respective holes provided on the both sides and be exposed to an external portion of the sensing block (130), and
each exposed portion of the cell leads (122) is configured to be bent and stacked on the first connecting member (136) to be coupled to the first connecting member (136).

11. The battery package of claim 4, wherein the second connecting member (248) provided is at a position corresponding to the header pin (236f), wherein, when the battery assembly (210) is coupled to the lower housing (240), the header pin (236f) is connected to the second connecting member (248).

## Patentansprüche

1. Batteriesatz (100), der Folgendes umfasst:
eine Batteriebaugruppe (110), die einen Batteriezellenstapel (120) umfasst, der durch Stapeln mehrerer Batteriezellen gebildet wird, die eine Zellenleitung (122) umfassen, und einen Sensorblock (130), wobei der Sensorblock Folgendes umfasst: einen Blockkörperteil (131), der einen Klemmensitzteil (132) umfasst, und einen Zellenleitungskopplungsteil (133), der auf einer oder auf beiden Seiten des Klemmensitzteils (132) vorgesehen ist; und ein erstes Verbindungselement (136), das so konfiguriert ist, dass es auf dem Klemmensitzteil (132) sitzt, und unter Verwendung eines leitfähigen Materials bereitgestellt wird, wobei der Sensorblock (130) zum Koppeln mit einer Seitenfläche des Batteriezellenstapels (120) konfiguriert ist,
wobei die Zellenleitung (122) zum Einfügen in den Zellenleitungskopplungsteil (133) des Sensorblocks (130) und zum elektrischen und strukturellen Verbinden mit dem ersten Verbindungselement (136) konfiguriert ist,
**dadurch gekennzeichnet, dass**
der Batteriesatz ein unteres Gehäuse (140) aufweist, das auf einer unteren Seite der Batteriebaugruppe (110) vorgesehen ist, wobei das untere Gehäuse (140) Folgendes umfasst: ein zweites Verbindungselement (148), das in einer Position entsprechend dem ersten Verbindungselement (136) vorgesehen ist,
wobei, wenn die Batteriebaugruppe (110) mit dem unteren Gehäuse (140) gekoppelt ist, das erste Verbindungselement (136) mit dem zweiten Verbindungselement (148) verbunden ist.

2. Batteriesatz nach Anspruch 1, wobei der Sensorblock ferner Folgendes umfasst:
einen Zellenstapelbefestigungsteil (135), der auf einer Seite des Blockkörperteils (131) vorgesehen und zum Befestigen des Blockkörperteils (131) an einem Batteriezellenstapel (120) konfiguriert ist.

3. Batteriesatz nach Anspruch 1, wobei das erste Verbindungselement (136) Folgendes umfasst:
einen Klemmenkörperteil (136a), der so konfiguriert ist, dass er auf dem Klemmensitzteil (132) sitzt;
einen Biegeteil (136b), der so konfiguriert ist, dass er von beiden Seiten des Klemmenkörperteils (136a) gebogen wird, um die beiden Seiten des Klemmensitzteils (132) zu umschließen; und
einen Verbindungsteil (136d), der an einem Endteil des Klemmenkörperteils (136a) vorgesehen ist und eine Breite hat, die in Richtung einer äußeren Seite abnimmt.

4. Batteriesatz nach Anspruch 1, wobei mehrere erste Verbindungselemente (236) vorgesehen sind, und
der Sensorblock (230) ferner Folgendes umfasst:
ein Schaltungssubstrat (236e), mit dem die mehreren ersten Verbindungselemente (236) verbunden sind; und
einen Steckleistenstift (236f), konfiguriert zum Sammeln eines durch das Schaltungssubstrat (236e) fließenden Signals und zum Senden des gesammelten Signals zu einem externen Gerät.

5. Batteriesatz nach Anspruch 4, wobei der Blockkörperteil (231) ferner Folgendes umfasst:
einen Schaltungssubstratsitzteil (237), auf dem das Schaltungssubstrat (236e) sitzen soll; und
einen Abdeckteil (237a), konfiguriert zum Schützen des Steckleistenstifts (236f).

6. Batteriesatz nach Anspruch 1, wobei der Blockkörperteil (131) ferner einen ersten Verriegelungsteil (134a) umfasst, der in Form eines Hakens auf einer Seite des Klemmensitzteils (132) vorgesehen ist,
das erste Verbindungselement (136) ferner einen ersten Aufhängteil (136c) umfasst, vorgesehen in einer Form, die dem ersten Verriegelungsteil (134a) entspricht, und
das erste Verbindungselement (136) zum Befestigen an dem Blockkörperteil (131) durch Koppeln des ersten Verriegelungsteils (134a) und des ersten Aufhängteils (136c) konfiguriert ist.

7. Batteriesatz nach Anspruch 1, wobei der Blockkörperteil (131) ferner einen zweiten Verriegelungsteil (134b) umfasst, der so konfiguriert ist, dass er von einer Oberseite des Klemmensitzteils (132) vorsteht, und
das erste Verbindungselement (136) ferner einen zweiten Aufhängteil (136e) umfasst, der in Form eines Lochs entsprechend dem zweiten Verriegelungsteil (134b) vorgesehen ist.

8. Batteriesatz nach Anspruch 7, wobei der Zellenleitungskopplungsteil (133) ein Loch ist, das auf einer oder auf beiden Seiten des Klemmensitzteils (132) vorgesehen ist,
die Zellenleitung (122) so konfiguriert ist, dass sie den Zellenleitungskopplungsteil (133) penetriert und auf einem externen Teil des Sensorblocks (130) exponiert ist, und
das erste Verbindungselement (136) Folgendes umfasst:
einen Klemmenkörperteil (136a), der so konfiguriert ist, dass er auf dem Klemmensitzteil (132) sitzt; und
einen Biegeteil (136b), der so konfiguriert ist, dass er von beiden Seiten des Klemmenkörperteils (136a) gebogen und in den Zellenleitungskopplungsteil (133) eingefügt wird.

9. Batteriesatz nach Anspruch 1, wobei der Zellenleitungskopplungsteil (133) ein Loch ist, das auf einer oder auf beiden Seiten des Klemmensitzteils (132) vorgesehen ist,
die Zellenleitung (122) so konfiguriert ist, dass sie den Zellenleitungskopplungsteil (133) penetriert und auf einem externen Teil des Sensorblocks (130) exponiert ist, und
ein exponierter Teil der Zellenleitung (122) so konfiguriert ist, dass er gebogen und verschweißt wird, während er mit dem ersten Verbindungselement (136) des Sensorblocks (130) in Kontakt ist.

10. Batteriesatz nach Anspruch 1, wobei der Zellenleitungskopplungsteil (133) ein Loch ist, das auf beiden Seiten des Klemmensitzteils (132) vorgesehen ist,
mehrere Zellenleitungen (122) so konfiguriert sind, dass sie die jeweiligen auf den beiden Seiten vorgesehenen Löcher penetrieren und auf einem externen Teil des Sensorblocks (130) exponiert sind, und
jeder exponierte Teil der Zellenleitungen (122) so konfiguriert ist, dass er auf dem ersten Verbindungselement (136) gebogen und gestapelt ist, um mit dem ersten Verbindungselement (136) gekoppelt zu werden.

11. Batteriesatz nach Anspruch 4, wobei das zweite Verbindungselement (248) in einer Position entsprechend dem Steckleistenstift (236f) vorgesehen ist, wobei, wenn der Batteriesatz (210) mit dem unteren Gehäuse (240) gekoppelt ist, der Steckleistenstift (236f) mit dem zweiten Verbindungselement (248) verbunden ist.

## Revendications

1. Bloc-batterie (100) comprenant :
un ensemble batterie (110) comprenant un empilement d'éléments de batterie (120) formé en empilant une pluralité d'éléments de batterie comprenant un conducteur d'élément (122), et un bloc de détection (130), le bloc de détection comprenant : une partie de corps de bloc (131) comprenant une partie d'assise de borne (132), et une partie de couplage de conducteur d'élément (133) fournie sur un côté, ou les deux côtés, de la partie d'assise de borne (132) ; et un premier élément de connexion (136) configuré pour être assis sur la partie d'assise de borne (132), et fourni en utilisant un matériau conducteur, dans lequel le bloc de détection (130) est configuré pour être couplé à une surface latérale de l'empilement d'éléments de batterie (120),
dans lequel le conducteur d'élément (122) est configuré pour être inséré dans la partie de couplage de conducteur d'élément (133) du bloc de détection (130), et connecté électriquement et structurellement au premier élément de connexion (136),
**caractérisé en ce que**
le bloc batterie comporte un boîtier inférieur (140) fourni sur un côté inférieur de l'ensemble batterie (110), le boîtier inférieur (140) comprenant : un second élément de connexion (148) fourni à une position qui correspond au premier élément de connexion (136),
dans lequel quand l'ensemble batterie (110) est couplé au boîtier inférieur (140), le premier élément de connexion (136) est connecté au second élément de connexion (148).

2. Bloc-batterie selon la revendication 1, dans lequel le bloc de détection comprend en outre :
une partie de fixation d'empilement d'éléments (135) fournie sur un côté de la partie de corps de bloc (131), et configurée pour fixer la partie de corps de bloc (131) à un empilement d'éléments de batterie (120).

3. Bloc-batterie selon la revendication 1, dans lequel le premier élément de connexion (136) comprend :
une partie de corps de borne (136a) configurée pour être assise sur la partie d'assise de borne (132) ;
une partie fléchie (136b) configurée pour être fléchie depuis les deux côtés de la partie de corps de borne (136a) pour enfermer les deux côtés de la partie d'assise de borne (132) ; et
une partie de connexion (136d) fournie au niveau d'une partie d'extrémité de la partie de corps de borne (136a), et présentant une largeur s'amenuisant vers un côté externe.

4. Bloc-batterie selon la revendication 1, dans lequel est fournie une pluralité de premiers éléments de connexion (236), et
le bloc de détection (230) comprenant en outre :
un substrat de circuit (236e) auquel est connectée la pluralité de premiers éléments de connexion (236) ; et
une fiche d'embase (236f) configurée pour collecter un signal traversant le substrat de circuit (236e) et transmettre le signal collecté à un dispositif externe.

5. Bloc-batterie selon la revendication 4, dans lequel la partie de corps de bloc (231) comprend en outre :
une partie d'assise de substrat de circuit (237) sur laquelle le substrat de circuit (236e) est destiné à être assis ; et
une partie de revêtement (237a) configurée pour protéger la fiche d'embase (236f).

6. Bloc-batterie selon la revendication 1, dans lequel la partie de corps de bloc (131) comprend en outre une première partie de verrouillage (134a) fournie sous forme de crochet sur un côté de la partie d'assise de borne (132),
le premier élément de connexion (136) comprend en outre une première partie d'accrochage (136c) fournie dans une forme correspondant à la première partie de verrouillage (134a), et
le premier élément de connexion (136) est configuré pour être fixé à la partie de corps de bloc (131) en couplant la première partie de verrouillage (134a) et la première partie d'accrochage (136c).

7. Bloc-batterie selon la revendication 1, dans lequel la partie de corps de bloc (131) comprend en outre une seconde partie de verrouillage (134b) configurée pour dépasser d'une surface supérieure de la partie d'assise de borne (132), et
le premier élément de connexion (136) comprend en outre une seconde partie d'accrochage (136e) fournie sous forme de trou correspondant à la seconde partie de verrouillage (134b).

8. Bloc-batterie selon la revendication 7, dans lequel la partie de couplage de conducteur d'élément (133) est un trou fourni sur un côté, ou les deux côtés, de la partie d'assise de borne (132),
le conducteur d'élément (122) est configuré pour pénétrer à travers la partie de couplage de conducteur d'élément (133) et être exposé à une partie externe du bloc de détection (130), et
le premier élément de connexion (136) comprend :
une partie de corps de borne (136a) configurée pour être assise sur la partie d'assise de borne (132) ; et
une partie fléchie (136b) configurée pour être fléchie depuis les deux côtés de la partie de corps de borne (136a), et insérée dans la partie de couplage de conducteur d'élément (133).

9. Bloc-batterie selon la revendication 1, dans lequel la partie de couplage de conducteur d'élément (133) est un trou fourni sur un côté, ou les deux côtés, de la partie d'assise de borne (132),
le conducteur d'élément (122) est configuré pour pénétrer à travers la partie de couplage de conducteur d'élément (133) et être exposé à une partie externe du bloc de détection (130), et
une partie exposée du conducteur d'élément (122) est configurée pour être fléchie et soudée tout en étant en contact avec le premier élément de connexion (136) du bloc de détection (130).

10. Bloc-batterie selon la revendication 1, dans lequel la partie de couplage de conducteur d'élément (133) est un trou fourni sur chacun des deux côtés de la partie d'assise de borne (132),
une pluralité de conducteurs d'éléments (122) est configurée pour pénétrer à travers les trous respectifs fournis sur les deux côtés et être exposée à une partie externe du bloc de détection (130), et
chaque partie exposée des conducteurs d'éléments (122) est configurée pour être fléchie et empilée sur le premier élément de connexion (136) en vue de son couplage au premier élément de connexion (136).

11. Bloc-batterie selon la revendication 4, dans lequel le second élément de connexion (248) fourni est à une position correspondant à la fiche d'embase (236f), dans lequel, quand l'ensemble batterie (210) est couplé au boîtier inférieur (240), la fiche d'embase (236f) est connectée au second élément de connexion (248).
